Europäisches Patentamt

European Patent Office

Office européen des brevets

(11) Publication number: **0 280 750 B1**

# EUROPEAN PATENT SPECIFICATION

(45) Date of publication of patent specification: **29.01.92**  (51) Int. Cl.5: **B01D 53/14**, B01D 53/34, C02F 3/06

(21) Application number: **87102978.1**

(22) Date of filing: **03.03.87**

(54) **Method and apparatus for treating H2S containing gases.**

(43) Date of publication of application:
**07.09.88 Bulletin 88/36**

(45) Publication of the grant of the patent:
**29.01.92 Bulletin 92/05**

(84) Designated Contracting States:
**DE GB NL**

(56) References cited:
**EP-A- 0 220 776
FR-A- 2 367 704
US-A- 3 972 965
US-A- 4 139 456**

**PATENT ABSTRACTS OF JAPAN, vol. 7, no. 273 (C-198)[1418], 6th December 1983; & JP-A-58 152 488 (SUMITOMO JUKIKAI EN-VIROTECH K.K.) 10-09-1983**

**CHEMIE INGENIEUR TECHNIK, vol. 56, no. 8, August 1984, pages 599-609, Verlag Chemie GmbH, Weinheim, DE; C. OEHME: "Trägerbiologien in der Abwassertechnik"**

(73) Proprietor: **Dowa Mining Co., Ltd.
8-2, Marunouchi 1-chome
Chiyoda-ku Tokyo(JP)**

(72) Inventor: **Sonta, Hiromi
32-2, Otarube Kosakamachi
Kazuno-gun Akita-ken(JP)**
Inventor: **Shiratori, Toshikazu
Hokushinryo, 5-3-62 Tsuchizakiminatokita
Akita-shi Akita-ken(JP)**

(74) Representative: **Strehl, Schübel-Hopf, Groening
Maximilianstrasse 54 Postfach 22 14 55
W-8000 München 22(DE)**

**Description**

The present invention relates to a method as well as an apparatus for treating $H_2S$ containing gases. More particularly, the present invention relates to an improved method that can be implemented with a very compact equipment layout in performing the following process: an iron-oxidizing bacterium is allowed to grow in a fixed-bed type oxidation vessel so as to convert a solution of ferrous sulfate to a solution of ferric sulfate; $H_2S$ in the gas to be treated is absorbed by the solution of ferric sulfate; the solution of ferrous sulfate that forms as a result of $H_2S$ absorption is again oxidized with the iron-oxidizing bacterium to form another supply of a solution of ferric sulfate which is repeatedly used in absorbing $H_2S$ in the gas being treated; and the sulfur content of the solution of ferric sulfate used as the $H_2S$ absorbing liquor is fixed and recovered in the form of elemental sulfur ($S^0$).

From US-A-3 972 965 there is known an apparatus for the bacterial treatment of sewage which is supplied with a special aerator for providing the liquid with oxygen. However, since the liquid is contacted with the oxygen in form of a thin film, only a short contact time can be achieved by this apparatus. Furthermore from Chemie-Ingenieur-Technik, 56 (1984), p. 599-609 carriers for supporting bacteria are known which are to be used in waste water purification technology.

Bacterial oxidation of ferrous sulfate containing solutions has been accomplished for many years by such classical methods as the trickling filter process and the rotary disk process. In order to improve the efficiency of oxidation, methods are commercially used in which a dense population of iron-oxidizing bacteria that are adhered to iron precipitates or diatomaceous earth is retained in the oxidation vessel. See, for example, the disclosure in Japanese Patent Publication No. 38981/1972 entitled "Method of Continuous Oxidation of $Fe^{2+}$ in Mine Water with Iron Oxides Containing an Iron-Oxidizing Bacterium" and US-A-4,139,456 "Process for Oxidation Treatment of $Fe^{2+}$ in wastewater", both having been filed an patented by the applicant of subject application.

Methods are also known to treat $H_2S$ in gases with the solution of ferric sulfate produced by oxidation with iron-oxidizing bacteria, and they are disclosed in Japanese Patent Publication No. 21691/1986, "Method of Treating $H_2S$ in Gases", and Japanese Patent Public Disclosure No. 21721/1986, "Method of Treating $H_2S$ in gases", both having been also filed by the applicant of subject application; furthermore, such a method is also known from JP-A-58152488.

The aforementioned conventional methods, in which iron-oxidizing bacteria are deposited on diatomaceous earth or other particulate matters that are suspended in solutions in the oxidation vessel, have the following disadvantages.

(1) A large-scale oxidation and a separation vessel (i.e., thickener) are necessary and this leads to the need to provide a very large installation area.

(2) The need to blow a large volume of air into the oxidation vessel leads to great power consumption.

The first problem is particularly serious in Japan where large quantities of $H_2S$ have to be treated at oil refineries and other plants.

The present invention has been accomplished in order to solve the aforementioned problems of the prior art and it provides a new method for achieving efficient treatment of $H_2S$ containing gases with a smaller apparatus that employs a fixed bed type oxidizing vessel wherein an oxidation vessel and a separation vessel are combined into a unitary system.

The present invention offers an improved method of treating a $H_2S$ containing gas to remove the $H_2S$ comprising the steps of:

(1) introducing the $H_2S$ containing gas into a solution of ferric sulfate to absorb the $H_2S$ therein and react the absorbed $H_2S$ with the ferric sulfate in the solution, whereby the $H_2S$ is removed from the gas and the ferric sulfate is reduced to ferrous sulfate, with elemental sulfur being formed;

(2) separating and recovering the elemental sulfur from the ferrous sulfate-containing solution formed in step (1);

(3) repeatedly passing the ferrous sulfate containing solution from which the elemental sulfur has been removed in step (2) through a vessel containing a fixed bed type, stationary bacteria support supporting iron-oxidizing bacteria while an air stream is supplied into the solution in a position that it is not directly in contact with the bed, whereby the ferrous sulfate is oxidized to ferric sulfate by the dissolved air oxygen by the action of the iron-oxidizing bacteria, and

(4) returning a portion of the ferric sulfate solution, which has been formed in step (3) to step (1), for use in treating the $H_2S$ containing gas.

Furthermore, the present invention provides an apparatus for treating $H_2S$ containing gases to remove the $H_2S$ comprising :

a gas-treating device (10) for absorbing the $H_2S$ containing gas in a solution of ferric sulfate and

reacting the absorbed $H_2S$ with the ferric sulfate in the solution to remove the $H_2S$ from the gas and reduce ferric sulfate to ferrous sulfate, with elemental sulfur being formed;

means (12) for separating and recovering the elemental sulfur from the ferrous sulfate-containing solution formed in the gas-treating device;

an oxidation vessel comprising upper and lower porous plates (4a, 4b) which are spaced apart and horizontally fixed across the vessel to partition the vessel and form a chamber in the interior of that vessel and a fixed bed type, stationary bacteria support supporting iron-oxidizing bacteria for oxidizing the ferrous sulfate containing solution formed in the gas treating device; said fixed bed type bacteria support being fixed between said upper and lower porous plates (4a, 4b) in the interior of the oxidation vessel and being selected from glass wool, zeolite, bentonite, alumina, pumice stone, PVC raschig rings and Pole rings;

an air-lift pipe (2) for supplying an air stream into the oxidation vessel having top and bottom ends which are open, said air lift pipe being fixedly supported in the oxidation vessel and penetrating through the porous plates (4a, 4b), where the upper end extends above the upper porous plate (4a) and the bottom end extends below the bottom porous plate (4b) into a lower portion of said oxidation vessel and being operated to carry the solution which has been passed through said bacteria support bed up the air-lift pipe and out of the upper end and to dissolve the air oxygen in said solution;

means (8) for supplying an air stream into the bottom of the air-lift pipe (2); and

means (7) for removing a portion of the ferric sulfate solution from the oxidation vessel and delivering it to the gas-treating device for use in treating the $H_2S$ containing gas; and

means (9) for supplying the ferrous sulfate containing solution which has been formed in the gas-treating device and from which the elemental sulfur has been removed by the elemental sulfur separating and recovering means to the oxidation vessel for oxidation of ferrous sulfate to ferric sulfate.

The bacterium support with which the oxidation vessel is filled may be selected from a variety of acid-resistant materials onto which the iron-oxidizing bacterium can be deposited, such as glass-wool, zeolite, bentonite, alumina, pumice stone and plastics.

Various industrial wastewaters such as those discharged from non-ferrous metal mines, from refining plants and from other plants in general may be fed into the oxidation step as the ferrous sulfate containing solution. Such wastewaters can be satisfactorily oxidized with iron-oxidizing bacteria if their $Fe^{2+}$ concentrations are within the range of about 1 - 50 g/L. The pH of the feed solution is determined such that it will produce no precipitate while attaining a satisfactory efficiency of oxidation in the reactor, i.e., oxidation vessel. Better results can be attained if the pH of the feed solution is lowered to 1.8 or less by preliminary treatment. If the feed solution is the wastewater from a refining plant or other wastewater that do not contain any iron-oxidizing bacteria or nutrient sources therefor, nutrients such as nitrogen, phosphorus and potassium salts are preferably added to the feed solution so as to ensure active bacterial growth.

The bacterium used in the present invention is selected from known iron-oxidizing bacteria such as Thiobacillus ferroxidans that may be prepared by the following procedure: a seed iron-oxidizing bacterium in slime in wastewater is cultivated in a solution that contains ferrous ions in a high concentration (ca 30 g/L) and colonies having a high oxidation capability are selected from the culture. The so separated bacteria have an oxidation capability that ranges from 2 to 5 times the abilities of wild iron-oxidizing bacteria present in the slime of wastewaters and some of them have been deposited with the Fermentation Research Institute, the Agency of Industrial Science and Technology under Assession Numbers FERM 7443, 7444, 7555 and 7556.

Fig. 1 is a flowsheet of the method of the present invention;

Fig. 2 is a schematic drawing of an oxidation vessel that is preferably used to implement the method of the present invention;

Fig. 3 is a graph showing the profile of oxidation rate versus the volume of air blown into the oxidation vessel;

Fig. 4 is a graph showing the profile of oxidation rate versus the position from which air is blown into an air-lift pipe;

Fig. 5 is a graph showing the profile of $Fe^{2+}$ concentrations in an liquor that was continuously oxidized with the concentration of the feed liquor set to various values; and

Fig. 6 is a schematic diagram showing the construction of an air bubble tower that may be preferably used as a $H_2S$ absorber in the practice of the method of the present invention.

The treating method of the present invention is hereunder described with reference to the following examples that should be read in conjunction with the accompanying drawings.

Example 1

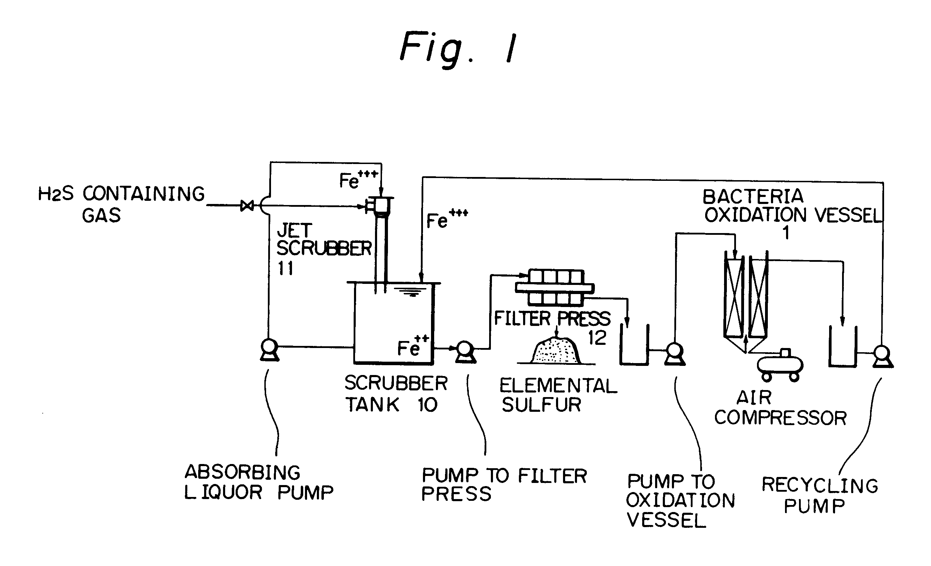

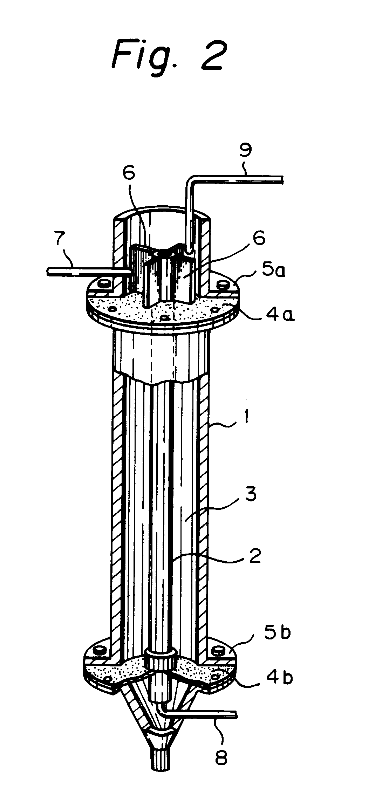

A flowsheet of the method of the present invention is depicted in Fig. 1. A bacterial oxidation vessel 1 wherein a solution of ferrous sulfate is oxidized to a solution of ferric sulfate is shown enlarged in Fig. 2. The oxidation vessel 1 contains in its interior a smaller vessel 3 that is filled with glass-wool (not shown) serving as a bacterium support. The vessel 3 is defined by porous plates 4a and 4b that are horizontally fixed on top and bottom of the vessel 1 with flanges 5a and 5b, respectively.

An air-lift pipe 2 that is open at both ends is fixedly supported in the axial direction of the vessel 1 and penetrates through the porous plates 4a and 4b. That portion of the air-lift pipe which projects beyond the porous plate 4a is equipped with a plurality of liquid separating plates 6 that extend radially toward the inside wall of the oxidizing vessel 1. These plates divide the space above the porous plate 4a into a plurality of compartments (four in Fig. 2). A pipe 9 through which a ferrous sulfate containing solution is supplied as the feed solution is inserted from above into one of the compartments defined by the plates 6. Another one of the compartments is provided with an overflow pipe 7 communicating with the outside of the vessel 1. A compressed air blowing pipe 8 is inserted into the bottom end of the air-lift pipe 2 and the other end of this pipe 8 is connected to an external air compressor.

The method of the present invention will proceed as follows. The feed liquor is permitted to flow into one of the compartments defined by the separator plates and the flow rate of the liquor, which is determined in consideration of the air-lift action, is controlled such that the liquid level in the vessel 1 is substantially equal to the height of the overflow pipe 7. When compressed air is blown into the air-lift pipe 2 from its bottom, a diffuser plate (not shown) positioned within the lower end of the pipe 2 produces tiny air bubbles, which rise through the pipe 2 together with the feed liquor that is being sucked from the bottom of the pipe 2. The liquor flowing out of the top end of the air-lift pipe 2 is distributed by the separator plates 6 and part of it is discharged out of the system through the overflow pipe 7 while the remaining majority of the liquor goes down through the vessel 3 and is recharged into the air-lift pipe together with compressed air. As it is circulated through the system in this manner, the feed solution is subjected to repeated cycles of oxidation.

In Example 1, an experiment of oxidative treatment was conducted with a system including an oxidation vessel 1 that had an inside diameter of 110 mm and an effective liquid level of 400 mm, and a vessel 3 that was filled with a total of 70 g/L of glass-wool on which an iron-oxidizing bacterium was deposited. The reactor 1 was fed with 20 ml/min of a solution containing 10 g/L of $Fe^{2+}$ while it was bubbled with air at a rate of 0.6 $Nm^3/min/m^2$. With the feed solution being circulated in the manner described above, an oxidation treatment was carried out continuously for a period of 3 days.

The liquor being discharged through the overflow pipe 7 containing 0.1 g/L of $Fe^{2+}$ and this indicated that the feed solution had been thoroughly oxidized.

Glass-wool used as the bacterium support may be replaced by zeolite, bentonite, alumina, pumice stone, plastics, PVC Raschig ring and Pole ring, and the present inventors confirmed that equally good results are obtained with these support materials.

The solution of ferric sulfate obtained in the oxidation vessel 1 was then forced into a scrubber tank 10 with a recycling pump. The solution was further sent to a jet scrubber 11 with an associated pump and in the scrubber the solution was brought into contact with a $H_2S$ containing gas so as to absorb the $H_2S$ in that gas. At the same time, elemental sulfur formed as a result of the following reaction:

$$Fe_2(SO_4)_3 + H_2S \rightarrow 2FeSO_4 + H_2SO_4 + S^0.$$

In Example 1, a $H_2S$ containing gas was treated with the liquor for rate and $H_2S$ concentration being varied as shown in Fig. 1. Measurement of the $H_2S$ concentration in the product gas with a Kitagawa detector tube showed that the method of the present invention had achieved 98.8% desulfurization or higher.

Table 1

| Liquor flow rate (L/hr) | Gas flow rate (m$^3$/hr) | H$_2$S concentration | | Percent H$_2$S absorption |
|---|---|---|---|---|
| | | feed | product | |
| 3000 | 6 | 6,200 | 75 | 98.8 |
| 3000 | 5 | 5,500 | 49 | 99.1 |
| 3000 | 3.2 | 6,200 | 13 | 99.8 |

The solution of ferrous sulfate containing the elemental sulfur (S$^0$) that was formed as a result of H$_2$S absorption was withdrawn from the bottom of the scrubber tank 10 and sent to a filter press with a pump so as to separate the elemental sulfur from the solution of ferrous sulfate.

The sulfur-free solution of ferrous sulfate was returned to the oxidation vessel 1 where it was oxidized to form a solution of ferric sulfate. The resulting solution of ferric sulfate was again sent to the scrubber tank 10 for another use in the absorption of H$_2$S.

The elemental sulfur which forms during the practice of the method of the present invention may be recovered by any method that suits a specific purpose of sulfur recovery. Two exemplary methods are: (1) separation and recovery with a filter press; and (2) flocculation and precipitation in a separating vessel.

Example 2

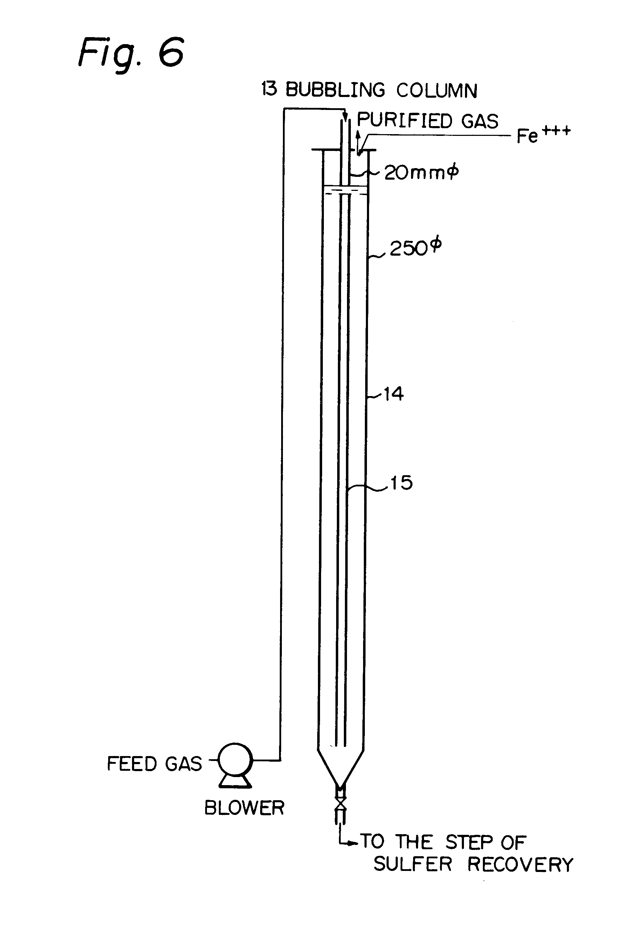

A H$_2$S containing gas having the H$_2$S concentrations shown in Table 2 was treated, with the gas flow rate and the liquid depth in a bubbling column (i.e., the distance from the level of the stationary absorbing liquor to the gas blowing inlet) being varied in order to investigate the relationship between the liquid depth and the efficiency of desulfurization. Oxidation and recovery of elemental sulfur were conducted in the same manner as in Example 1. The bubbling column used in place of the jet scrubber in the absorption step had the construction shown in Fig. 6. This bubbling column indicated at 13 in Fig. 6 consisted of an outer cylinder 14 (250 mm⌀) and a centrally positioned inner cylinder 15 (20 mm⌀). The bottom of the column was conically shaped to allow the product elemental sulfur to be extracted from the bottom. The results of the treatment conducted in Example 2 are shown in Table 2, from which one can see that the liquid depth of at least 5 m was sufficient to achieve 98% desulfurization or more as in Example 1.

Table 2

| Gas flow rate / Liquid depth | 70 L/min | | | 90 L/min | | | 130 L/min | | |
|---|---|---|---|---|---|---|---|---|---|
| | H2S concentration (ppm) entrance | exit | H2S absorption (%) | H2S concentration (ppm) entrance | exit | H2S absorption (%) | H2S concentration (ppm) entrance | exit | H2S absorption (%) |
| 3 m | 140 | 8 | 94.3 | 125 | 8 | 93.6 | 125 | 9 | 92.8 |
| 5 m | 175 | 1 | 99.4 | 175 | 2 | 98.9 | 155 | 3 | 98.1 |
| 7 m | 180 | 0 | 100.0 | 140 | 0 | 100.0 | 175 | 0 | 100.0 |

Reference Example 1

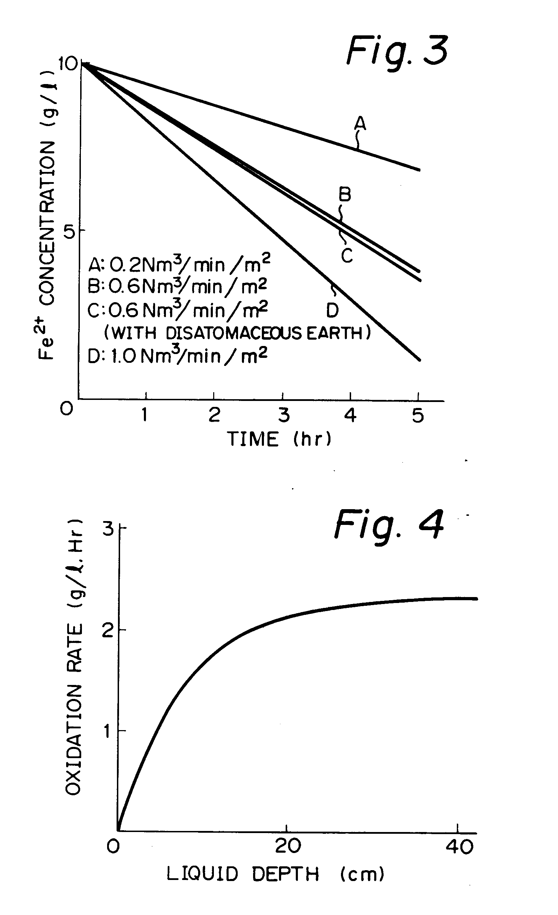

A batch operation was performed with the system used in Examples 1 and 2 in order to investigate the change in oxidation rate as a function of the amount of air blown. The results are depicted in Fig. 3. Air was

6

blown at rates of 0.2, 0.6 and 1.0 $Nm^3$/min per square meter of a cross section of the reactor (oxidation vessel). A treatment was also conducted by the conventional method with 0.6 $Nm^3$/min/$m^2$ of air being blown into the oxidation vessel filled with about 50 g/L of diatomaceous earth. As one can see from the data shown in Fig. 3, the efficiency of oxidation attained in Reference Example 1 was comparable to that achieved in Examples 1 and 2 wherein the oxidation vessel filled with 70 g/L of glass-wool was bubbled with 0.6 $Nm^3$/min/$m^2$ of air.

Reference Example 2

An experiment was conducted in order to investigate the change in oxidation rate as a function of the position from which air was blown into the air-lift pipe. The amount of air blown into the oxidation vessel was held constant at 0.6 $Nm^3$/min/$m^2$. The results are shown in Fig. 4, from which one can see that substantially equal results were obtained whether air was blown into the air-lift pipe from a middle portion thereof or from the bottom. This may be probably because the rate of oxidation would not be greatly affected so long as air is held in contact with the liquid for a sufficient period of time of ensure saturation of the liquid with air.

It may safely be concluded that in performing the method of the present invention, air need not be blown into the air-lift pipe from its bottom and may be blown from a middle portion of the pipe. By doing this, one can reduce the power consumption when operating with large equipment.

Reference Example 3

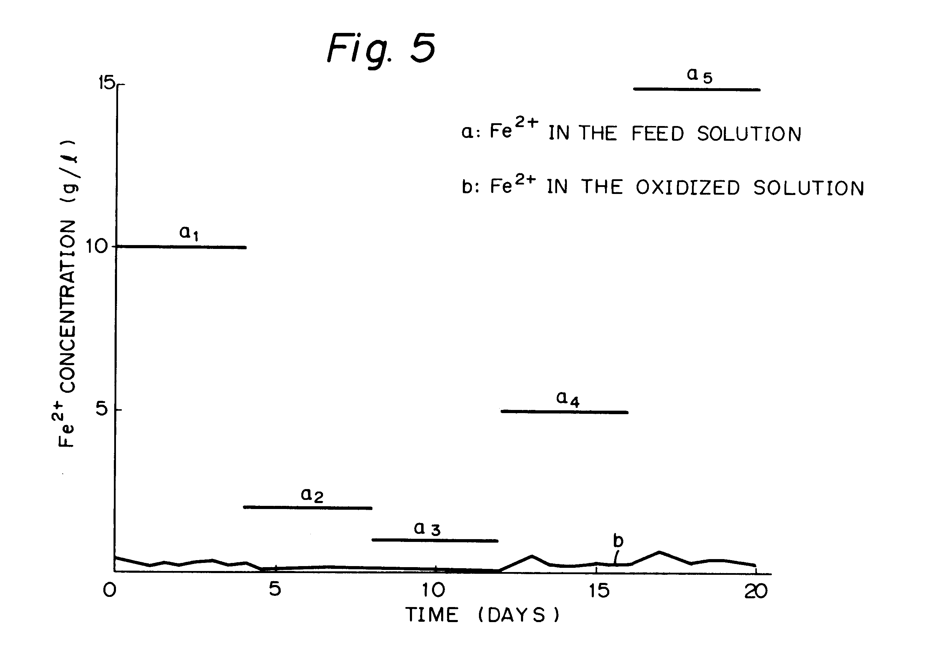

A continuous treatment was carried out with 0.6 $Nm^3$/min/$m^2$ of air being blown from the bottom of the air-lift pipe while a feed solution was supplied into the reactor at varying $Fe^{2+}$ concentrations of 1, 2, 5, 10 and 15 g/L. The results are shown in Fig. 5, from which one can see that the iron-oxidizing bacterium worked well at all of the $Fe^{2+}$ concentrations employed to achieve satisfactory levels of oxidation efficiency.

To summarize the advantages of the method of the present invention, it eliminates the use of the conventional types of oxidation vessel and separation vessel (thickener) and, hence, can be operated with a compact system, which affords a great economic advantage in terms of plant installation.

**Claims**

1. A method for treating an $H_2S$ containing gas to remove the $H_2S$ comprising the steps of:
   (1) introducing the $H_2S$ containing gas into a solution of ferric sulfate to absorb the $H_2S$ therein and react the absorbed $H_2S$ with the ferric sulfate in the solution, whereby the $H_2S$ is removed from the gas and the ferric sulfate is reduced to ferrous sulfate, with elemental sulfur being formed;
   (2) separating and recovering the elemental sulfur from the ferrous sulfate-containing solution formed in step (1);
   (3) repeatedly passing the ferrous sulfate containing solution from which the elemental sulfur has been removed in step (2) through a vessel containing a fixed bed type, stationary bacteria support supporting iron-oxidizing bacteria while an air stream is supplied into the solution in a position that it is not directly in contact with the bed, whereby the ferrous sulfate is oxidized to ferric sulfate by the dissolved air oxygen by the action of the iron-oxidizing bacteria, and
   (4) returning a portion of the ferric sulfate solution, which has been formed in step (3) to step (1), for use in treating the $H_2S$ containing gas.

2. An apparatus for treating an $H_2S$ containing gas to remove the $H_2S$ comprising:
   a gas-treating device (10) for absorbing the $H_2S$ containing gas in a solution of ferric sulfate and reacting the absorbed $H_2S$ with the ferric sulfate in the solution to remove the $H_2S$ from the gas and reduce ferric sulfate to ferrous sulfate, with elemental sulfur being formed;
   means (12) for separating and recovering the elemental sulfur from the ferrous sulfate-containing solution formed in the gas-treating device;
   an oxidation vessel comprising upper and lower porous plates (4a, 4b) which are spaced apart and horizontally fixed across the vessel to partition the vessel and form a chamber in the interior of that vessel and a fixed bed type, stationary bacteria support supporting iron-oxidizing bacteria for oxidizing the ferrous sulfate containing solution formed in the gas treating device; said fixed bed type bacteria support being fixed between said upper and lower porous plates (4a, 4b) in the interior of the oxidation vessel and being selected from glass wool, zeolite, bentonite, alumina, pumice stone, PVC raschig rings and Pole rings;

an air-lift pipe (2) for supplying an air stream into the oxidation vessel having top and bottom ends which are open, said air lift pipe being fixedly supported in the oxidation vessel and penetrating through the porous plates (4a, 4b), where the upper end extends above the upper porous plate (4a) and the bottom end extends below the bottom porous plate (4b) into a lower portion of said oxidation vessel and being operated to carry the solution which has been passed through said bacteria support bed up the air-lift pipe and out of the upper end and to dissolve the air oxygen in said solution;

means (8) for supplying an air stream into the bottom of the air-lift pipe (2); and

means (7) for removing a portion of the ferric sulfate solution from the oxidation vessel and delivering it to the gas-treating device for use in treating the $H_2S$ containing gas; and

means (9) for supplying the ferrous sulfate containing solution which has been formed in the gas-treating device and from which the elemental sulfur has been removed by the elemental sulfur separating and recovering means to the oxidation vessel for oxidation of ferrous sulfate to ferric sulfate.

**Revendications**

1. Procédé pour traiter un gaz contenant du $H_2S$ pour retirer le $H_2S$ comprenant les étapes :

(1) d'introduction du gaz contenant du $H_2S$ dans une solution de sulfate ferrique pour absorber le $H_2S$ à l'intérieur de celle-ci et faire réagir le $H_2S$ absorbé avec le sulfate ferrique dans la solution, au moyen de laquelle le $H_2S$ est retiré du gaz et le sulfate ferrique est réduit en sulfate ferreux, avec le soufre à l'état d'élément étant formé;

(2) de séparation et de récupération du soufre à l'état d'élément à partir de la solution contenant du sulfate ferreux formée à l'étape (1);

(3) du passage répété de la solution contenant du sulfate ferreux à partir de laquelle le soufre à l'état d'élément a été retiré dans l'étape (2), à travers un récipient contenant un support immobile de bactéries, du type lit fixé, supportant des bactéries oxydant le fer pendant qu'un jet d'air est alimenté dans la solution dans une position telle qu'il n'est pas directement au contact du lit, au moyen duquel le sulfate ferreux est oxydé en sulfate ferrique par l'oxygène de l'air dissous par l'action des bactéries oxydant le fer, et (4) de retour d'une partie de la solution de sulfate ferrique, qui a été formée à l'étape (3), vers l'étape (1) pour une utilisation dans le traitement du gaz contenant du $H_2S$.

2. Dispositif pour traiter un gaz contenant du $H_2S$ pour retirer le $H_2S$ comprenant :

un dispositif de traitement du gaz (10) pour absorber le gaz contenant du $H_2S$ dans une solution de sulfate ferrique et pour faire réagir le $H_2S$ absorbé avec le sulfate ferrique dans la solution pour retirer le $H_{2S}$ du gaz et réduire le sulfate ferrique en sulfate ferreux, avec le soufre à l'état d'élément étant formé;

des moyens (12) pour séparer et récupérer le soufre à l'état d'élément à partir de la solution contenant du sulfate ferreux formée dans le dispositif de traitement du gaz;

un récipient d'oxydation comprenant des plaques poreuses supérieure et inférieure (4a, 4b) qui sont espacées l'une de l'autre et fixées horizontalement à travers le récipient pour diviser le récipient et former une chambre à l'intérieur de ce récipient et un support immobile de bactéries, du type lit fixé, supportant des bactéries oxydant le fer pour oxyder la solution contenant du sulfate ferreux formée dans le dispositif de traitement du gaz, le support de bactéries précité du type lit fixé, étant fixé entre les plaques poreuses supérieure et inférieure précitées (4a, 4b) à l'intérieur du récipient d'oxydation et étant sélectionné parmi la laine de verre, la zéolite, la bentonite, l'oxyde d'aluminium, la pierre ponce, des anneaux Raschig et des anneaux Pole de PVC;

une conduite à air comprimé (2) pour alimenter un jet d'air dans le récipient d'oxydation ayant des extrémités supérieure et inférieure qui sont ouvertes, ladite conduite à air comprimé étant supportée de manière fixée dans le récipient d'oxydation et pénétrant à travers les plaques poreuses (4a, 4b), où l'extrémité supérieure s'étend au-dessus de la plaque poreuse supérieure (4a) et l'extrémité inférieure s'étend en-dessous de la plaque poreuse inférieure (4b) dans une partie inférieure du récipient d'oxydation précité et étant mise en fonction pour entraîner la solution qui a été passée à travers le lit support de bactéries précité jusqu'à la conduite à air comprimé et en-dehors de l'extrémité supérieure et pour dissoudre l'oxygène de l'air dans la solution précitée;

des moyens (8) pour alimenter un jet d'air dans le bas de la conduite à air comprimé (2); et

des moyens (7) pour retirer une partie de la solution de sulfate ferrique du récipient d'oxydation et la refouler dans le dispositif de traitement du gaz pour une utilisation dans le traitement du gaz contenant du $H_2S$; et

des moyens (9) pour alimenter la solution contenant du sulfate ferreux qui a été formée dans le dispositif de traitement du gaz et à partir de laquelle le soufre à l'état d'élément a été retiré par des moyens de séparation et de récupération du soufre à l'état d'élément, dans le récipient d'oxydation pour une oxydation du sulfate ferreux en sulfate ferrique.

## Patentansprüche

1. Verfahren zur Behandlung eines $H_2S$-haltigen Gases, um das $H_2S$ zu entfernen, das die Schritte umfaßt:
   (1) Einleiten des $H_2S$-haltigen Gases in eine Eisen-III-sulfat-Lösung, um das $H_2S$ darin zu absorbieren und um das absorbierte $H_2S$ mit dem Eisen-III-sulfat in der Lösung umzusetzen, wodurch das $H_2S$ aus dem Gas entfernt wird und das Eisen-III-sulfat zu Eisen-II-sulfat reduziert wird unter Ausbildung von elementarem Schwefel;
   (2) Abtrennen und Gewinnen des elementaren Schwefels aus der in Stufe (1) gebildeten Eisen-II-sulfat enthaltenden Lösung;
   (3) wiederholtes Durchleiten der Eisen-II-sulfat enthaltenden Lösung, aus der der elementare Schwefel in Stufe (2) entfernt worden ist, durch ein Reaktionsgefäß, das einen stationären Bakterienträger vom Festbett-Typ enthält, der Eisen-oxidierende Bakterien trägt, während in die Lösung ein Luftstrom an einer solchen Stelle eingeleitet wird, daß er nicht in direktem Kontakt mit dem Bett ist, wodurch das Eisen-II-sulfat mittels des gelösten Luftsauerstoffs durch die Einwirkung der Eisen-oxidierenden Bakterien zu Eisen-III-sulfat oxidiert wird, und
   (4) Rückführen eines Teils der Eisen-III-sulfat-Lösung, die in Stufe (3) gebildet worden ist, in Stufe (1) zur Verwendung zum Behandeln des $H_2S$ enthaltenden Gases.

2. Vorrichtung zur Behandlung eines $H_2S$ enthaltenden Gases, um das $H_2S$ zu entfernen, die enthält:
   eine Gasbehandlungsvorrichtung (10) zur Absorption des $H_2S$ enthaltenden Gases in einer Eisen-III-sulfat-Lösung und zur Umsetzung des absorbierten $H_2S$ mit dem Eisen-III-sulfat in der Lösung, um das $H_2S$ aus dem Gas zu entfernen und um Eisen-III-sulfat zu Eisen-II-sulfat zu reduzieren, unter Ausbildung von elementarem Schwefel;
   Einrichtungen (12) zur Abtrennung und Gewinnung des elementaren Schwefels aus der Eisen-II-sulfathaltigen Lösung, die in der Gasbehandlungsvorrichtung gebildet worden ist;
   ein Oxidationsreaktionsgefäß, enthaltend obere und untere poröse Platten (4a, 4b), die einen Zwischenraum einschließen und quer durch das Reaktionsgefäß horizontal befestigt sind, wodurch das Reaktionsgefäß abgeteilt wird und eine Kammer im Inneren des Reaktionsgefäßes gebildet wird, und ein stationärer Bakterienträger vom Festbett-Typ gebildet wird, der Eisen-oxidierende Bakterien zur Oxidation der Eisen-II-sulfat enthaltenden Lösung trägt, die in der Gasbehandlungsvorrichtung gebildet wird; wobei der Bakterienträger vom Festbett-Typ zwischen der oberen und unteren porösen Platte (4a, 4b) im Inneren des Oxidationsreaktionsgefäßes fixiert ist und ausgewählt ist unter Glaswolle, Zeolith, Bentonit, Aluminiumoxid, Bimsstein, PVC-Raschigringen und Polringen;
   eine Luftförderleitung (2) zum Einleiten eines Luftstroms in das Oxidationsreaktionsgefäß, deren oberes und unteres Ende offen ist, wobei die Luftförderleitung fest in dem Oxidationsreaktionsgefäß montiert ist und die porösen Platten (4a, 4b) so durchdringt, daß das obere Ende über die obere poröse Platte (4a) hinausragt und das untere Ende unterhalb der unteren porösen Platte in einen unteren Bereich des Oxidationsreaktionsgefäßes hineinragt, und die so betrieben wird, daß die Lösung, die durch das Bakterienträgerbett durchgeleitet worden ist, die Luftförderleitung hinauf und aus dem oberen Ende hinausgetragen wird und Luftsauerstoff in der Lösung gelöst wird;
   Einrichtungen (8) zum Zuführen eines Luftstroms in das untere Ende der Luftförderleitung (2); und
   Einrichtungen (7) zum Entfernen eines Teils der Eisen-III-sulfat-Lösung aus dem Oxidationsreaktionsgefäß und zum Transport dieses Teils zur Gasbehandlungsvorrichtung zur Verwendung bei der Behandlung des $H_2S$ enthaltenden Gases; und
   Einrichtungen (9) zum Einleiten der Eisen-II-sulfat enthaltenden Lösung, die in der Gasbehandlungsvorrichtung gebildet worden ist, und aus der der elementare Schwefel mit Hilfe der Einrichtung zur Abtrennung und Gewinnung von elementarem Schwefel entfernt worden ist, in das Oxidationsreaktionsgefäß zur Oxidation von Eisen-II-sulfat zu Eisen-III-sulfat.

# Fig. 1

# Fig. 2

*Fig. 3*

A: $0.2 Nm^3/min/m^2$
B: $0.6 Nm^3/min/m^2$
C: $0.6 Nm^3/min/m^2$
   (WITH DISATOMACEOUS EARTH)
D: $1.0 Nm^3/min/m^2$

$Fe^{2+}$ CONCENTRATION (g/ℓ)

TIME (hr)

*Fig. 4*

OXIDATION RATE (g/ℓ.Hr)

LIQUID DEPTH (cm)

Fig. 5

a: $Fe^{2+}$ IN THE FEED SOLUTION

b: $Fe^{2+}$ IN THE OXIDIZED SOLUTION

EP 0 280 750 B1

# Fig. 6

13 BUBBLING COLUMN

PURIFIED GAS — Fe$^{+++}$

20mm$\phi$

250$\phi$

14

15

FEED GAS

BLOWER

→ TO THE STEP OF
SULFER RECOVERY